# EUROPEAN PATENT SPECIFICATION

(11) **EP 1 571 060 B1**
(45) Date of publication and mention of the grant of the patent: **04.10.2006**
(21) Application number: 05101748.1
(22) Date of filing: 07.03.2005
(51) Int. Cl.: B60T 13/26

(54) **Vehicle with a pneumatic control line for operating the brakes of a trailer.**
Fahrzeug mit einer pneumatischen Steuerleitung für Anhängerbremsen
Véhicule avec un conduit pneumatique pour les frains de remorque

(30) Priority: 06.03.2004 GB 0405087
(43) Date of publication of application: 07.09.2005
(73) Proprietor: CNH U.K. LIMITED, Basildon, Essex SS14 3AD (GB)
(72) Inventor: Gooding, Nigel, Witham Essex CM8 1NH (GB); Chapman, Martin, Southend on Sea, Essex (GB)
(74) Representative: CNH IP Department

(56) References cited:
- DE-A1- 3 431 674
- DE-C- 679 682
- US-A- 4 616 881
- US-A- 4 671 578

## Description

The present invention relates to a vehicle having a braking circuit operated by at least one brake pedal, a parking brake and a pneumatic control line for connection to a trailer to operate the brakes of the trailer when the vehicle is braked.

Document US-A- 4,618,881 discloses a vehicle having the features of the preamble of claim 1.

It is known in agricultural vehicles, such as tractors, to use a control valve to regulate the pneumatic pressure in a control line leading to the pneumatic braking system of a trailer in dependence upon the braking force applied to the wheels of the vehicle. In the case of a vehicle that can be steered by independently braking the wheels on its opposite sides, the trailer is only braked when the wheels of the vehicle are braked in unison.

In a vehicle with a hydraulic braking circuit, a dual line control valve has been used to regulate the pneumatic pressure in the trailer brake control line. Such a valve receives, as a first input, a pneumatic pressure that is generated only when both brake pedals are initially applied, thereby opening a (normally closed) brake switch (having dual normally open and normally closed contacts) provided on each brake pedal. The switches, which also serve as brake light operating switches (using the normally open contacts), are positioned to be closed before the vehicle brakes are applied in the electrical circuits that operate the "advance" trailer braking solenoid valve and the automatic four wheel drive engagement on the vehicle. This mode of application ensures failsafe operation of both systems. As a result, the "advance" trailer braking solenoid valve applies air tank pressure to the air operation spool of the dual line control valve. The valve then supplies about 1 to 2 Bar "advance" control pressure to the trailer to allow the trailer to be braked before the brakes of the vehicle take effect, to allow smooth and safe braking. A further regulating valve may be provided to allow the driver to manually adjust the "advance" or delay between the braking of the trailer and the towing vehicle depending on the prevailing operating conditions of the type of trailer hauled.

The dual line control valve receives, as a second input, the hydraulic pressure applied to the wheels on both sides of the vehicle under increased braking. This pressure operates the hydraulic spool of the control valve and allows uniform increase of the trailer brake air control pressure towards maximum as the towing vehicle is being braked.

Conventionally, in order to brake the trailer when the parking brake of the vehicle is applied, a mechanical connection, such as a Bowden cable or rod linkage, is provided between the vehicle parking brake operating arm (provided on the vehicle transmission) and the dual line control valve, which sets the pressure in the pneumatic trailer brake control line. The operation at the dual line control valve is achieved by the cable/rod rotating an integral end cap which moves out over a ball/ramp device, manually moving the valve spool out and setting the pressure in the pneumatic trailer brake control line. The valve spool moves out only a very small amount, hence the ball/ramp only operates over a very minute angle of the total rotation available. Since operating on a ball/ramp device, the operating cable/linkage needs to be rigid. Therefore, if a cable is employed, it needs to of the 'push/pull' design as the valve must always be permanently returned to its rest position when not operated. Previous experiments with return springs and a standard Bowden cable have shown that the system is not reliable enough to continue working with pre-set on/off positions without any adjustments, causing problems with correct system operation.

Such a mechanical connection moreover places limitations on where the dual line control valve can be located. Current transmission handbrakes have to be very efficient and durable, resulting in long operating arms and large cable adjustment ranges to allow for the take up of wear. This results in the adjustment range of the control cable/rod, provided between the transmission brake lever and the control valve, also having to be excessive in length. If the vehicle handbrake cable fails, no operation of either the vehicle brakes or the trailer brakes will occur. In production, both cables/rods have to be adjusted accurately to ensure correct operation of the trailer brake control through the vehicle park brake. Any subsequent service operations in adjusting the vehicle handbrake cable also require re-adjustment of the dual line control valve cable/rod. If this is not carried out, the control valve cable/rod may travel too far and because of the small operation angle of the ball/ramp, as discussed previously, the end cap on the control valve may move too far over the ball/ramp, and the trailer brakes will release with full operation of the vehicle handbrake control. This failure mode could also happen if the vehicle transmission brake wears significantly, resulting in excessive handbrake operating lever travel, and lack of maintenance in not readjusting the control valve cable/rod. It will be appreciated that the above adjustments must be carried out accurately by trained personnel, adding to the overall costs of maintenance. As already mentioned, another fundamental shortcoming of the currently known systems include a lack of trailer brake operation upon failure of the cable or rod or any other links to the control valve. Furthermore, frequent mechanical action of the control valve end cap through manual operation of the hand brake lever causes wear to the interior of the valve. In addition, it is often very difficult or even impossible to adjust the cables/rod to ensure that the trailer always brakes before the tractor. Finally, if the operator turns off the engine and leaves the cab, without applying the hand brake lever, no brakes on the tractor or trailer are applied.

With a view to mitigating the foregoing disadvantage, the present invention provides a vehicle having a braking circuit operated by at least one brake pedal, a parking brake and a pneumatic control line for connection to a trailer to operate the brakes of the trailer when the vehicle is braked, the vehicle comprising a first, pressure operated, valve for regulating the pressure in the pneumatic control line upon application of the vehicle brake pedal and a second, electrically operated, valve acting in parallel with the first valve to apply a pneumatic pressure to the control line in response to operation of the vehicle parking brake.

Preferably, the first and second valves are connected to the pneumatic control line my means of a priority valve that automatically establishes a connection between the control line and whichever of the first and second valves has the higher output pressure.

Though agricultural vehicles are commonly fitted with hydraulic braking circuits, nothing precludes the use of the invention in a vehicle having pneumatic brakes. Also, though it is preferred for the first valve to be a dual line control valve, this too is not fundamental to the invention, the aim of which is to brake the trailer, with the most failsafe operation possible, when the parking brake of the vehicle is applied without there being a mechanical connection to the parking brake.

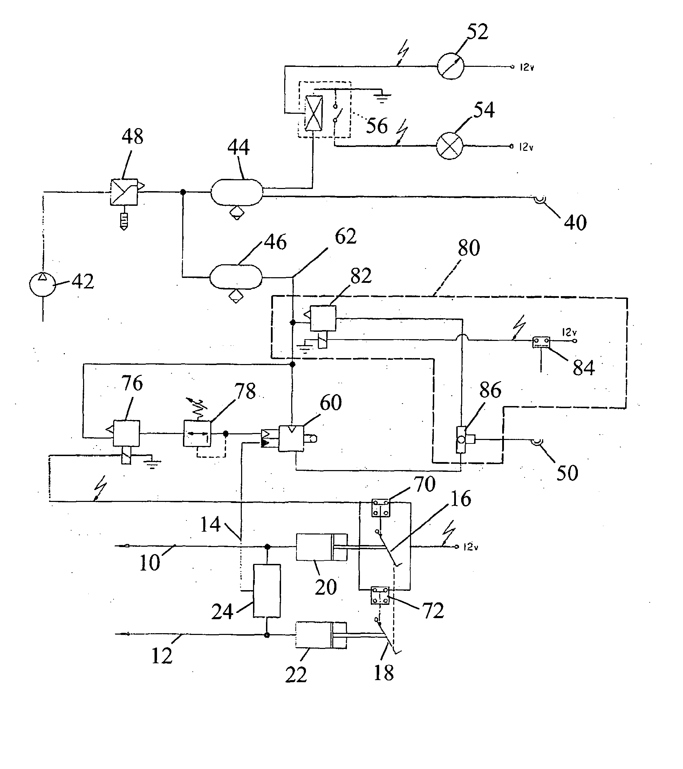

The invention will now be described further, by way of example, with reference to the accompanying drawing, which is a diagram of the braking circuits of a vehicle of the invention.

In the drawing, all electrical lines are marked with a zig-zag arrow; the lines 10, 12 and 14 are hydraulic lines and all the remaining lines are pneumatic lines.

The vehicle has left and right brake pedals 16 and 18 connected to left and right master cylinders 20 and 22 connected, respectively, to the lines 10 and 12 which lead to the slave cylinders operating the left and right brakes of the vehicle. The provision of separate brake pedals for the left and right side of the vehicle is to allow the vehicle to be steered by its brakes in off-road conditions. When driving on normal roads, the pedals 16 and 18 are ganged together as represented by the dotted line linking them. A logic valve 24 connected to the lines 10 and 12 is closed when the brakes on the opposite sides of the vehicle are not applied equally. When both brakes are applied at the same time, however, signifying that the vehicle is being braked rather than steered, the valve 24 opens and applies the hydraulic pressure in the lines 10 and 12 to the line 14, which controls the braking of the trailer.

The brakes of the trailer operate pneumatically and are connected to two output lines 40 and 50 of the vehicle, termed the red supply line and the yellow control line, respectively. The red line 40 is under a constant high pressure and provides stored pressure towards the trailer which is the power for operating the air brake actuators of the trailer. The yellow line 50 is a control line which regulates the braking force via a relay emergency valve (not shown) on the trailer.

Ambient air pressurised by a compressor 42 is supplied to two linked accumulators 44 and 46 by way of a pressure regulator 48. The accumulators 44 & 46 provide compressed air to the red line 40. A meter 52 indicates the available braking pressure and a warning light 54, operated by a pressure switch 56, alerts the driver when the available braking pressure drops below a safe limit. The accumulators also provide the compressed air for the yellow control line 50.

The brake pedals 16 and 18 are associated with electrical switches 70 and 72 which may also serve as brake light switches. The travel of the brake pedals required to operate these switches is less than that required to operate the brakes of the vehicle. Thus, the switches 70 and 72 interrupt an electrical signal on a line towards a solenoid valve 76 before the vehicle brakes begin to take effect. This zero volt signal on said line allows the normally open solenoid valve 76 to supply compressed air through a valve 78 to a first control input of a dual line control valve (DLCV) 60. In this way, the DLCV 60 increases the pressure in the yellow control line 50 to approximately 1 to 2 bar before the vehicle brakes are applied so that the trailer is braked before the vehicle. The regulator valve 78 allows the driver to set manually the delay between the application of the trailer brakes and the application of the vehicle brakes.

The hydraulic line 14, coming from the logic valve 24, acts as a second input to the DLCV 60 which receives compressed air over a line 62 from the accumulator 46 and acts to regulate the pressure on the yellow line 50 in dependence upon the hydraulic braking pressure applied to the vehicle wheels.

The braking system as so far described is conventional and it is not therefore believed necessary for it to be described in further detail. To understand the invention, it suffices to appreciate that the DLCV 60 acts to operate the trailer brakes when the vehicle is being braked.

As furthermore is conventional, the vehicle also has a hand brake (not shown) which can be used as a parking brake or as an emergency brake. In the prior art, the parking brake would be mechanically connected to the DLCV 60, for example by means of a Bowden cable or rod linkage, to act directly on the valve spool of the DLCV 60 and thereby operate the trailer brakes when the parking brake is applied.

The requirement for a mechanical connection to the DLCV 60, however, places limitations on where it can be positioned and results in other disadvantages as discussed above. E.g., as mentioned, the handbrake operates on brake plates, usually in the transmission, which are prone to wear, especially when the vehicle is still relatively new. As a result, the movement required of the handbrake for it to apply the brakes effectively increases. When the DLCV 60 is mechanically coupled to the handbrake, the mechanical linkage is in constant need of re-adjustment otherwise the ball/ramp device inside the DLCV 60 would be pushed too far, resulting in the DLCV 60 to be turned off again. All this would result in the vehicle to be braked, but not the trailer.

To overcome the problems presented by connecting the DLCV 60 mechanically to the handbrake, the invention provides the elements shown within the box 80 drawn in dotted lines. These elements obviate the need for a Bowden cable/rod connection or other mechanical connection between the handbrake and the DLCV 60. Within the box 80, a (normally open) solenoid operated air valve 82 connected to the accumulators 44 and 46 is operated by a switch 84 which is open when the parking brake is applied. The output of the solenoid valve 82 (maximum tank and operating pressure) is applied to the yellow control line 50 by way of a priority valve 86 which acts to supply to the yellow line 50 the higher of the output pressures of the DLCV 60 and the solenoid valve 82, while maintaining the two output lines isolated from one another. The priority valve may for example comprise a ball movable in a housing having valve seats at each end and an output connection to the yellow line 50 at its centre.

When the parking brake is applied, the opening of the switch 84 will provide zero volts to the normally open solenoid valve 82 and will apply maximum pressure to the yellow line 50 to fully apply the brakes on the trailer. The solenoid valve 82 can be housed in the same housing as the DLCV (60) or it may be mounted separately. As the valve only requires an electrical connection to the parking brake, it may be positioned at will on the vehicle.

The system according to the invention has many commercially viable and more importantly, operational safety aspects. No mechanical operation linkage from the vehicle transmission brake lever to the control valve is required, making assembly far easier and resulting in an overall cost saving. No accurate initial adjustment is required, and no re-adjustment is required at service intervals. Even if the vehicle handbrake cable would fail, trailer brakes will still apply from the vehicle handbrake lever, through operation of the electrical switch 84. A reduction in additional undue wear to the control valve operating spool will be apparent, as the handbrake no longer has a connection to a manually operated part of the DLCV 60. As such, the manually operated part of the DLCV 60 can be deleted, resulting in a cheaper valve and hence a cost saving.

Solenoid valve 82, operating the control line, is, as already mentioned, normally open under spring action. This means that, if the system loses 12 volt supply, e.g. as a result of relay or fuse failure, or wiring disconnection, it is fail safe and the trailer brakes will apply fully. The vehicle handbrake system switch 84 is also a normally open witch, i.e. when the handbrake is applied, the switch is open. Hence, if the switch comes adrift or the wiring disconnects (even if the handbrake is not applied), again the system will be failsafe and the trailer brakes will apply. The switch 84 operates as soon as the vehicle handbrake lever is applied and the trailer brakes are guaranteed to apply prior to the tractor brakes (to prevent jackknife-action during an emergency braking situation). If the operator leaves the vehicle cab and does not apply the handbrake, when the engine is off, no 12 volts are supplied to the solenoid 82, meaning that the trailer brakes are automatically applied. The system can easily be electrically linked into a transmission park lever switch or a seat proximity switch and the vehicle speed sensor to offer even further failsafe protection.

## Claims

1. A vehicle having a braking circuit operated by at least one brake pedal (16, 18), a parking brake and a pneumatic control line (50) for connection to a trailer to operate the brakes of the trailer when the vehicle is braked, and
**characterized in that** the vehicle comprises a first, pressure operated valve (60) for regulating the pressure in the pneumatic control line (50) upon application of the at least one vehicle brake pedal (16, 18) and a second, electrically operated valve (82) acting in parallel with the first valve (60) to apply a pneumatic pressure to the control line (50) in response to operation of the vehicle parking brake.

2. A vehicle according to claim 1, wherein the first and second valves (60, 82) are connected to the pneumatic control line (50) by means of a priority valve (86) which automatically establishes a connection between the control line (50) and whichever of the first and second valves (60, 82) has the higher output pressure.

3. A vehicle according to claim 1 or 2, wherein the vehicle has a hydraulic braking circuit (14) and the pressure applied to the control line (50) is varied in dependence upon the pressure in the hydraulic circuit (14).

4. A vehicle according to claim 3, wherein the valve for regulating the pressure in the pneumatic control line (50) upon application of the at least one vehicle brake pedal (16, 18) is a dual line control valve (60) that receives a further control input from a pneumatic line pressurised in response to closing of a switch (70, 72) operated by the at least one brake pedal (16, 18) .

## Patentansprüche

1. Fahrzeug mit einem Bremskreis, der durch zumindest ein Bremspedal (16, 18) betätigt wird, mit einer Feststellbremse und mit einer pneumatischen Steuerleitung (50) zur Verbindung mit einem Anhänger zur Betätigung der Bremsen des Anhängers, wenn das Fahrzeug gebremst wird, und
**dadurch gekennzeichnet, dass** das Fahrzeug ein erstes druckbetätigtes Ventil (60) zum Regeln des Druckes in der pneumatischen Steuerleitung (50) beim Betätigen des zumindest einen Fahrzeug-Bremspedals (16, 18) und ein zweites elektrisch betätigtes Ventil (829 umfasst, dass parallel zu dem ersten Ventil (60) wirkt, um einen Pneumatikdruck an die Steuerleitung (50) in Abhängigkeit von einer Betätigung der Fahrzeug-Feststellbremse anzulegen.

2. Fahrzeug nach Anspruch 1, bei dem die ersten und zweiten Ventile (60, 82) mit der pneumatischen Steuerleitung (50) über ein Prioritätsventil (86) verbunden sind, das automatisch eine Verbindung zwischen der Steuerleitung (50) und demjenigen der ersten und zweiten Ventile (60, 82) herstellt, das den höheren Ausgangsdruck aufweist.

3. Fahrzeug nach Anspruch 1 oder 2, bei dem das Fahrzeug einen hydraulischen Bremskreis (14) aufweist und der der Steuerleitung (50) zugeführte Druck in Abhängigkeit von dem Druck in dem Hydraulikkreis (14) geändert wird.

4. Fahrzeug nach Anspruch 3, bei dem das Ventil zum Regeln des Druckes in der pneumatischen Steuerleitung (50) beim Betätigen des zumindest einen Fahrzeug-Bremspedals (16, 18) ein Doppelleitungssteuerventil (60) ist, das einen weiteren Steuereingang von einer Pneumatikleitung empfängt, die in Abhängigkeit von dem Schließen eines Schalters (70, 72) mit Druck beaufschlagt wird, der durch das zumindest eine Bremspedal (16, 18) betätigt wird.

## Revendications

1. Véhicule possédant un circuit de freinage actionné par au moins une pédale de frein (16,18), un frein de stationnement et une conduite de commande pneumatique (50) pour la connexion à une remorque de manière à actionner les freins de la remorque lorsque le véhicule est freiné, et
**caractérisée en ce que** le véhicule comprend d'abord une première soupape actionnée par la pression (60) pour réguler la pression dans la conduite de commande pneumatique (50) lors de l'application d'au moins une pédale de frein de véhicule (16, 18) et une deuxième soupape à commande électrique (82) agissant en parallèle avec la première soupape (60) afin d'appliquer une pression pneumatique à la conduite de commande (50) en réaction à l'actionnement du frein de stationnement du véhicule.

2. Véhicule selon la revendication 1, dans lequel les premières et deuxièmes soupapes (60, 82) sont reliées à la conduite de commande pneumatique (50) au moyen d'une soupape prioritaire (86) qui établit automatiquement une connexion entre la conduite de commande (50) et la première ou la deuxième soupape (60, 82) qui a la pression de sortie la plus élevée.

3. Véhicule selon la revendication 1 ou 2, dans lequel le véhicule possède une circuit de freinage hydraulique (14) et la pression appliquée à la conduite de commande (50) varie en fonction de la pression dans le circuit hydraulique (14).

4. Véhicule selon la revendication 3, dans lequel la soupape pour la régulation de la pression dans la conduite de commande pneumatique (50) au moment de l'application d'au moins une pédale de frein du véhicule (16, 18) est une soupape de commande à conduite double (60) qui reçoit une autre entrée de commande d'une conduite pneumatique pressurisée en réaction à la fermeture d'un commutateur (70, 72) actionné par au moins une pédale de frein (16, 18).
